(19) 〔European Patent Office logo〕 Europäisches Patentamt / European Patent Office / Office européen des brevets

(11) **EP 4 620 671 A1**

(12) # EUROPEAN PATENT APPLICATION
published in accordance with Art. 153(4) EPC

(43) Date of publication:
**24.09.2025 Bulletin 2025/39**

(21) Application number: **23891516.9**

(22) Date of filing: **13.11.2023**

(51) International Patent Classification (IPC):
**B32B 27/36** (2006.01)      **A41D 31/00** (2019.01)
**A41D 31/02** (2019.01)      **A41D 31/102** (2019.01)
**B32B 5/02** (2006.01)      **B32B 27/18** (2006.01)
**B32B 27/20** (2006.01)      **D06M 17/00** (2006.01)

(52) Cooperative Patent Classification (CPC):
**A41D 31/00; A41D 31/02; A41D 31/102;
B32B 5/02; B32B 5/26; B32B 27/02; B32B 27/12;
B32B 27/18; B32B 27/20; B32B 27/36; D06M 17/00**

(86) International application number:
**PCT/JP2023/040714**

(87) International publication number:
**WO 2024/106369 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.11.2022 JP 2022183991**

(71) Applicants:
• **Toray Industries, Inc.**
  **Tokyo 103-8666 (JP)**
• **Toray Celanese Co., Ltd.**
  **Tokyo 103-0023 (JP)**

(72) Inventors:
• **KOMORI Shinya**
  **Osaka-shi, Osaka 530-8222 (JP)**
• **HARUTA Masaru**
  **Otsu-shi, Shiga 520-2141 (JP)**
• **INADA Kojiro**
  **Otsu-shi, Shiga 520-2141 (JP)**
• **OKUNAGA Kenichi**
  **Nagoya-shi, Aichi 455-0025 (JP)**
• **RYOMOTO Takuya**
  **Tokyo 103-0023 (JP)**

(74) Representative: **Mewburn Ellis LLP
Aurora Building
Counterslip
Bristol BS1 6BX (GB)**

(54) **FIBROUS LAMINATED STRUCTURE, AND WATER-RESISTANT VAPOR-PERMEABLE GARMENT**

(57)   To provide a fiber laminated structure and waterproof breathable clothing having a highly practical waterproof breathable function with excellent light fastness and excellent recycling efficiency, the fiber laminated structure of the present invention is a fiber laminated structure including a 10 to 30 μm-thick non-porous film including a polyester film laminated on one surface of a woven fabric including a polyester fiber, wherein the polyester film contains 0.05 to 1.0 mass% of an ultraviolet absorber and a light stabilizer each, and 0.1 to 1.0 mass% of a titanium oxide having a band gap of 3.1 (eV) or more. The above fiber laminated structure can be suitably used for the waterproof breathable clothing.

**EP 4 620 671 A1**

## Description

TECHNICAL FIELD

The present invention relates to a fiber laminated structure and waterproof breathable clothing.

BACKGROUND ART

Conventionally, in order to obtain a fiber laminated structure superior in breathability and waterproofness, there has been employed so-called polyurethane wet coating in which polyurethane is dissolved using a dimethylformamide solvent or the like and laminated to a woven fabric by coating or the like, then introduced into water to solidify, and then made into a microporous film, to thereby form a film having both breathability and waterproofness, a method of laminating a resin film prepared by blending a highly breathable hydrophilic resin using a polymer having a polymer chain having a hydrophilic moiety introduced thereinto to a woven fabric, or a method of bonding an expanded microporous polytetrafluoroethylene film to a woven fabric.

However, from the viewpoint of recent depletion of petroleum resources and resource saving for environmental preservation, recycling use of clothing articles has been emphasized. In a conventional waterproof breathable material, a material of a textile product used for an outer fabric or a backing is typically different from a material of a film having the above-described waterproof breathable function. For example, there is a three-layer laminated product in which a nylon or polyester woven fabric is used as an outer fabric, a polyurethane or polytetrafluoroethylene film is laminated as a waterproof breathable functional film, and a polyester knitted fabric is further laminated as a backing. In a case where these materials are subjected to chemical recycling after use and disposal, it is necessary to individually separate and collect the outer fabric, the waterproof breathable functional film, and the backing.

As an attempt to reduce the cost of material separation and collection and facilitate recycling, a film with a waterproof breathable function made of a polyester material has been proposed (Patent Documents 1 and 2).

PRIOR ART DOCUMENT

PATENT DOCUMENTS

Patent Document 1: Japanese Patent Laid-open Publication No. 11-170461
Patent Document 2: Japanese Patent Laid-open Publication No. 2007-296797

SUMMARY OF THE INVENTION

PROBLEMS TO BE SOLVED BY THE INVENTION

However, a breathable polyester resin film as disclosed in Patent Documents 1 and 2 has low light fastness and is not satisfactory as a clothing material.

An object of the present invention is to solve the above problems and provide a fiber laminated structure and waterproof breathable clothing having a highly practical waterproof breathable function with excellent light fastness and excellent recycling efficiency.

SOLUTIONS TO THE PROBLEMS

In order to solve the above-described problems, the present invention has the following configuration.

(1) A fiber laminated structure including a 10 to 30 $\mu$m-thick non-porous film including a polyester film laminated on one surface of a woven or knitted fabric including a polyester fiber, wherein the polyester film contains 0.05 to 1.0 mass% of an ultraviolet absorber and a light stabilizer each, and 0.1 to 1.0 mass% of a titanium oxide having a band gap of 3.1 (eV) or more.

(2) A fiber laminated structure including a 10 to 30 $\mu$m-thick non-porous film including a polyester film laminated on one surface of a woven or knitted fabric including a polyester fiber, wherein the polyester film contains 0.05 to 1.0 mass% of an ultraviolet absorber and a light stabilizer each, and 0.1 to 1.0 mass% of an anatase titanium oxide.

(3) The fiber laminated structure according to (1) or (2), wherein the polyester film contains a polyester block copolymer including, as a constituent component, a hard segment including a crystalline polyester unit and a soft segment including an aliphatic polyether unit and/or an aliphatic polyester unit.

(4) The fiber laminated structure according to any of (1) to (3), wherein the woven or knitted fabric is a woven fabric.

(5) The fiber laminated structure according to any of (1) to (4), further including a knitted fabric including a polyester filament on the non-porous film including the polyester film.

(6) The fiber laminated structure according to any of (1) to (5), wherein the woven or knitted fabric including the polyester fiber has an ultraviolet shielding rate of 80% or more.

(7) The fiber laminated structure according to any of (1) to (6), wherein a water vapour permeability in accordance with JIS L-1099A-1 is 4000 $g/m^2 \cdot 24h$ or more, and a water vapour permeability in accordance with JIS L-1099B-1 is 10000 $g/m^2 \cdot 24h$ or more.

(8) The fiber laminated structure according to any of (1) to (7), wherein the woven or knitted fabric has stretchability in at least one of a warp direction and a weft direction, and an elongation rate in accordance with JIS L1096-2010 elongation rate A method (constant speed elongation method) is 10% or more.

(9) Waterproof breathable clothing including the fiber laminated structure according to any of (1) to (8).

EFFECTS OF THE INVENTION

According to the present invention, it is possible to provide a fiber laminated structure and waterproof breathable clothing having a highly practical waterproof breathable function with excellent light fastness and excellent recycling efficiency. The fiber laminated structure and the waterproof breathable clothing of the present invention can be used practically and suitably for sports clothing, uniform clothing, rainwear, and the like, and are also excellent in recycling efficiency after use.

EMBODIMENTS OF THE INVENTION

Hereinafter, the present invention will be described in detail.

A fiber laminated structure of the present invention is a fiber laminated structure in which a 10 to 30 μm-thick non-porous film including a polyester film is laminated on one surface of a woven or knitted fabric including polyester fibers. The above fiber laminated structure of the present invention is suitably used for clothing such as sports clothing, uniform clothing, and rainwear, and in this case, it is preferable to use the above woven or knitted fabric side as an outer fabric.

[Woven Fabric Including Polyester Fibers]

A polymer constituting the polyester fiber is a polymer having an ester bond, and specifically, polyalkylene terephthalate such as polyethylene terephthalate, polytrimethylene terephthalate, and polybutylene terephthalate is preferable. In addition, in order to modify these polyalkylene terephthalates, a copolymer obtained by copolymerizing 5-sodium sulfoisophthalic acid or the like and other copolymerization components may be used.

A preferable fiber form is a multifilament, and there is no problem even if the multifilament is a single-material yarn or a side-by-side or core-sheath composite multifilament. The single-material yarn herein refers to a fiber made of a single material (which may be a polymer alone or a composition containing two or more components) as a material constituting the fiber.

In the above description, the core-sheath type may be an eccentric core-sheath or a concentric core-sheath.

In the case of the side-by-side or core-sheath type composite multifilament, a side-by-side type or an eccentric core-sheath type which is a composite form in which three-dimensional coiled (helical) crimps are developed in the fiber by a combination of polymers is preferable. In a case where the side-by-side type or the eccentric core-sheath type is used as the composite form, a combination of the same type of polyester-based polymers having different viscosities, a combination of different types of polyester-based polymers such as polyethylene terephthalate and polybutylene terephthalate, or the like is suitably used as an example of the combination of polymers.

Examples of the combination of specific two components of materials forming the side-by-side or core-sheath composite multifilament include polytrimethylene terephthalate and polytrimethylene terephthalate, polytrimethylene terephthalate and polyethylene terephthalate, polyethylene terephthalate and polyethylene terephthalate, and polyethylene terephthalate and polybutylene terephthalate.

Use of the polyester fiber enhances recyclability such as material recycling and chemical recycling. The smaller the number of types of polyesters to be used, the more excellent the material recyclability, and the smaller the number of types of monomer components, the more excellent the chemical recyclability. Materials to be used may be appropriately selected in view of functions and recyclability required in practical use.

Stretchability can be obtained by using a false-twisted yarn or a side-by-side yarn of different polymers as the polyester fiber. A covered yarn using an elastic yarn such as a spandex yarn may also be used. However, it should be noted that as the blend ratio of the spandex yarn increases, the rate of contamination by another material increases and the recycling efficiency decreases.

In the present invention, in order to increase the recycling efficiency, the amount of polyester fiber as a fiber component in a woven fabric is preferably 100 mass%. For example, in a case where a non-polyester elastic yarn is used as described above, it is desirable that the content of the polyester fiber in a fiber constituting the woven fabric is high, and the ratio of the polyester fiber is preferably at least 80 mass% or more, more preferably 85 mass% or more, and still more preferably 90 mass% or more.

The cross-sectional shape of the fiber is not particularly limited, and a wide variety of fibers having a circular shape, a triangular shape, a hollow shape, or the like can be used. Furthermore, an additive that imparts antistatic properties and the like and a matting agent such as titanium oxide may be contained in the yarn.

The form of the woven fabric is not particularly limited, and a woven fabric such as plain, twill, satin, and rip structure, double structure, oxford, or tussah is preferable.

The total fineness of yarns used in the woven fabric is preferably 150 dtex or less. By reducing the thickness of the woven fabric, breathability is increased. If the yarns are excessively thin, tear strength or bursting strength is lowered, and therefore the total fineness is preferably 11 dtex or more. The total fineness is more preferably 20 dtex or more to 75 dtex or less.

Furthermore, it is preferable to make the density of the woven fabric as low as possible from the viewpoint of improving the water vapour permeability. However, when the fineness is decreased to reduce the density of the woven fabric, the ultraviolet shielding rate tends to decrease. For example, in a case where the woven fabric is used as an outer fabric and exposed to ultraviolet rays outdoors, the polyester film is irradiated with ultraviolet rays through the woven fabric. When the polyester film is irradiated with more ultraviolet rays through the woven fabric, the polyester film is generally easily deteriorated by ultraviolet irradiation.

When a higher function of preventing strength deterioration due to ultraviolet irradiation is required, it is preferable to increase the cover factor of the woven fabric to such an extent that no problem arises at a practical level.

As a method for improving the ultraviolet shielding rate by the cover factor of the woven fabric, a woven fabric having a cover factor of about 1600 to 3200 in the following formula can be preferably used.

Since a water vapour permeability in accordance with JIS L1099 (B-1 method) is higher as the cover factor is smaller, it is more preferable as the cover factor is smaller from the viewpoint of breathability. On the other hand, if the cover factor is too small, gaps between weaving yarns are large, and a waterproof breathable film is exposed and damaged by friction or the like, causing deterioration in waterproofness. Also in consideration of the texture of the fiber laminated structure, the cover factor is preferably 1600 to 2800, more preferably in a range of 2000 to 2600.

$$CF = \{(D1)^{1/2} \times M\} + \{(D2)^{1/2} \times N\}$$

where CF: cover factor,
D1: warp yarn fineness (dtex),
M: warp yarn density (yarns/2.54 cm),
D2: weft yarn fineness (dtex),
N: weft yarn density (yarns/2.54 cm).

The cover factor is calculated from the fineness and density of a final product after lamination.

Furthermore, the color of the outer fabric is made dark, or an additive having an ultraviolet ray shielding effect, such as an ultraviolet absorber and a titanium oxide, is mixed into the fiber to make it difficult for ultraviolet rays to reach the polyester film, so that a higher function of preventing strength deterioration due to ultraviolet irradiation can be obtained.

The ultraviolet shielding rate by the woven fabric of the outer fabric is preferably 80% or more, more preferably 85% or more. The lower the ultraviolet shielding rate, the greater the degree of freedom of the fineness, woven structure, and density to be used for the woven fabric, and there is no restriction on the color, the content of the titanium oxide in the fiber, and the addition amount of the ultraviolet absorber. The choice of the woven fabric increases in a case where the woven fabric side is used as the outer fabric. However, as a result, ultraviolet rays easily reach the polyester film through the woven fabric. For this reason, water resistance after bluescale grade 4 irradiation by a fade meter in accordance with JIS L0842 color fastness to light test tends to be low.

In order to obtain an ultraviolet shielding rate of 80% or more by the woven fabric of the outer fabric, it is particularly effective to increase the cover factor of the woven fabric or to make the color of the outer fabric dark.

In addition, as a method for improving the ultraviolet shielding rate by dyeing the woven fabric, dyeing processing using a dye is common. Such a dye is not particularly limited, and a disperse dye, a cationic dye, a fluorescent brightener, or the like may be used. However, for the cationic dye, it is necessary to select a fiber that can be dyed with the cationic dye, and thus it is preferable to use the disperse dye having higher versatility for dyeing.

In addition, in the present invention, it is more desirable to use a woven fabric having stretchability at least in either

# EP 4 620 671 A1

the warp direction or the weft direction, and in particular, it is preferable that an elongation rate in accordance with JIS L1096-2010 elongation rate A method (constant speed elongation method) is 10% or more. In order to obtain the woven fabric having stretchability, a stretchable fiber may be used as the polyester fiber.

The stretchability improves a wearing feeling, increases applications, and further increases the degree of freedom of a sewing pattern, which are preferable.

[Knitted Fabric Including Polyester Fibers]

Preferred fiber aspects including the polymer constituting the polyester fiber, the fiber form, the cross-sectional shape, the additive, and the content of the polyester fiber are the same as those described in the above section [Woven Fabric Including Polyester Fibers].

The form of a knitted fabric is not particularly limited, and a high-gauge and high-density knitted fabric is preferable.

The total fineness of yarns used in the knitted fabric is preferably 150 dtex or less. By reducing the thickness of the knitted fabric, breathability is increased. If the yarns are excessively thin, tear strength or bursting strength is lowered, and therefore the total fineness is preferably 11 dtex or more. The total fineness is more preferably 20 dtex or more to 75 dtex or less.

Furthermore, in terms of the ultraviolet shielding rate of the knitted fabric, it is preferable to make the density as low as possible from the viewpoint of improving the water vapour permeability. However, when the fineness is decreased to reduce the density of the knitted fabric, the ultraviolet shielding rate tends to decrease similarly to the woven fabric.

The ultraviolet shielding rate by the knitted fabric of the outer fabric is preferably 80% or more, more preferably 85% or more. The lower the ultraviolet shielding rate, the greater the degree of freedom of the fineness, knitted structure, and density to be used for the knitted fabric, and there is no restriction on the color, the content of the titanium oxide in the fiber, and the addition amount of the ultraviolet absorber. The choice of the knitted fabric increases in a case where the knitted fabric side is used as the outer fabric. However, as a result, ultraviolet rays easily reach the polyester film through the knitted fabric. For this reason, water resistance after bluescale grade 4 irradiation by a fade meter in accordance with JIS L0842 color fastness to light test tends to be low.

In order to obtain an ultraviolet shielding rate of 80% or more by the knitted fabric of the outer fabric, it is particularly effective to increase the density of the knitted fabric or to make the color of the outer fabric dark.

In addition, as a method for improving the ultraviolet shielding rate by dyeing the knitted fabric, the same concept as that described in the above section [Woven Fabric Including Polyester Fibers] and other woven fabrics can be applied.

In addition, in the present invention, it is more desirable to use a knitted fabric having stretchability at least in either the warp direction or the weft direction, and in particular, it is preferable that an elongation rate in accordance with JIS L1096-2010 elongation rate A method (constant speed elongation method) is 10% or more. As an example of obtaining the knitted fabric having stretchability, a stretchable fiber may be used as the polyester fiber. Here, the warp direction refers to a wale direction, and the weft direction refers to a course direction.

The stretchability improves a wearing feeling, increases applications, and further increases the degree of freedom of a sewing pattern, which are preferable.

[Non-Porous Film]

Hereinafter, the above non-porous film will be described.

A waterproof breathable material is often used in outdoor applications, is often exposed to sunlight when worn outdoors, and is used in clothing applications and frequently dried in sunlight after washing. In order to improve practical durability, it is essential to improve and enhance light fastness.

For this purpose, as described above, the woven or knitted fabric may be used as the outer fabric, and the ultraviolet shielding rate of the woven or knitted fabric may be improved, causing no ultraviolet rays to reach the polyester film which is a waterproof breathable film.

However, in a case where the fiber laminated structure of the present invention is used for clothing applications, selecting the material of the outer fabric so as to impart the function of causing no ultraviolet rays to reach the polyester film means specifying texture, touch, color, and pattern. Such specifying is an obstacle to development of clothing applications. Therefore, it is desirable to set the degree of freedom in selecting the outer fabric as high as possible. In order to improve the degree of freedom in selecting the outer fabric, it is desirable to impart the function of preventing strength deterioration due to ultraviolet irradiation to the polyester film as much as possible.

Therefore, in the present invention, it is necessary to make the polyester film constituting the 10 to 30 μm-thick non-porous film contain an ultraviolet absorber, a light stabilizer, and a titanium oxide. In the present invention, the above non-porous film can function as a waterproof breathable functional film. In addition, the ultraviolet absorber, the light stabilizer, and the titanium oxide can function as a light fastness improver.

As a result of adding the above three components, the polyester film is inhibited from being deteriorated even when exposed to ultraviolet rays, and as a result, a decrease in water resistance after ultraviolet irradiation is also inhibited, so that a white waterproof breathable functional film having high durability can be obtained.

In the present invention, the term "non-porous" means that there is no communication hole between the front surface and the back surface of a film in a case where the cross section of the film is observed with an electron microscope, and no air permeability is observed, that is, the air permeability is 0 cm$^3$/(cm$^2$·s) in a case where the film is measured in an air permeability test in accordance with JIS L1096-2010 A method (Frazier method).

[Ultraviolet Absorber]

In the present invention, the ultraviolet absorber is used to improve the light fastness of the polyester film to be used. Preferred examples of the ultraviolet absorber include benzotriazoles and benzophenones. Examples of the benzotriazoles include 2-(2'-hydroxy-5'-methylphenyl) benzotriazole, 2-(2-hydroxy-5-tert-butylphenyl)-2H-benzotriazole, and 2-[5-chloro-(2H)-benzotriazole-2-yl]-4-methyl-6-(tert-butyl) phenol, and examples of the benzophenones include 2-hydroxy-4-methoxy benzophenone and 2-hydroxy-4-n-octoxy benzophenone. It is necessary that the polyester film contains 0.05 to 1.0 mass% of the ultraviolet absorber, and the addition amount is preferably 0.1 to 0.5 mass%, more preferably 0.2 to 0.5 mass%.

[Light Stabilizer]

In the present invention, the light stabilizer is further used to improve the light fastness of the polyester film to be used. As an example of the light stabilizer, N-R type hindered amines or the like are preferable. Examples of the N-R type hindered amines include bis(1,2,2,6,6-pentamethyl-4-piperidinyl)-[[3,5-bis(1,1-dimethylethyl)-4-hydroxyphenyl] methyl] butyl malonate, and 2,4-bis[N-butyl-N-(1-cyclohexyloyl-2,2,6,6-tetramethylpiperidic-4-yl) amino]-6-(2-hydroxyethylamine)-1,3,5-tetrazine of an N-OR type amine. It is necessary that the polyester film contains 0.05 to 1.0 mass% of the light stabilizer, and the addition amount is preferably 0.1 to 0.5 mass%, more preferably 0.2 to 0.5 mass%.

[Titanium Oxide]

The titanium oxide used in the present invention is a titanium oxide having a band gap of 3.1 (eV) or more.

The absorption wavelength of the titanium oxide in the present invention can be obtained from a diffuse reflection spectrum using an ultraviolet-visible spectrophotometer. The band gap of the titanium oxide used in the present invention is 3.1 (eV) or more, and the absorption wavelength thereof corresponds to a wavelength of 400 nm or less which is an ultraviolet range. The band gap of the titanium oxide is preferably 3.2 (eV) or more. This corresponds to a wavelength of 388 nm or less as the absorption wavelength. The titanium oxide as described above includes an anatase titanium oxide, which can be preferably employed.

The wavelength and the energy of light are converted by the following calculation formula with the band gap as E (eV) and the absorption wavelength at the time of excitation (excitation wavelength) as λ (nm).

$$E \ [eV] \ = \ 1240/\lambda \ [nm]$$

The absorption wavelength of the titanium oxide in the present invention can be obtained using ultraviolet-visible spectrophotometers UV-2600 and ISR-2600Plus manufactured by Shimadzu Corporation.

In general, titanium oxide can have an anatase, rutile, or brookite crystal structure, but in the present invention, it is necessary to use the titanium oxide included in the above range.

From the viewpoint of general light fastness, a rutile crystal structure having low photocatalytic activity is usually preferably used. However, even when a titanium oxide having this rutile crystal structure is used, it is difficult to inhibit deterioration due to exposure to ultraviolet rays. In the present invention, the above specific titanium oxide is used from the viewpoint of inhibiting strength deterioration of the polyester film due to ultraviolet rays. Although the mechanism is not clear, the excitation wavelength of the titanium oxide having a band gap of 3.1 (eV) or more is a wavelength of 400 nm or less, and it is presumed that when the ultraviolet absorber and the light stabilizer are used together with the titanium oxide, the ultraviolet absorber absorbs ultraviolet rays to inhibit photoexcitation of the titanium oxide, and the light stabilizer stabilizes a reaction caused by the activated titanium oxide, so that deterioration due to ultraviolet rays can be inhibited.

The average particle size of the titanium oxide to be used is preferably 0.01 to 1 μm, more preferably 0.1 to 0.5 μm, and particularly preferably 0.1 to 0.3 μm. This is preferable because when the average particle size of a titanium oxide in a dispersion system is 0.18 to 0.24 μm, light scattering is large, and color developability and concealability as a white pigment are the best. The above average particle size refers to an average particle size determined by a method of converting a light intensity distribution of scattered light by a laser into a particle size distribution using laser diffraction particle size analyzer SALD-2300 manufactured by Shimadzu Corporation.

By setting the average particle size of the titanium oxide to 1 $\mu$m or less, occurrence of aggregation on the film surface due to poor dispersion of the titanium oxide is inhibited, occurrence of irregularities on the film surface due to aggregation is also inhibited, and excellent appearance is obtained. In addition, breathable waterproofness is not deteriorated, which is preferable. In addition, when the average particle size is 0.1 $\mu$m or more, favorable workability during film formation is obtained, which is preferable. In some applications, the ultraviolet absorber and the light stabilizer, and two or more types of titanium oxides having different crystal structures and different average particle sizes may be used.

As the above preferable titanium oxide, a commercially available product can also be used, and specific examples of the commercially available product having a band gap of 3.1 (eV) or more include anatase titanium oxide SA-1L manufactured by Sakai Chemical Industry Co., Ltd., anatase titanium oxide JA-C manufactured by Tayca Corporation, and anatase titanium oxide TA100 manufactured by Fuji Titanium Industry Co., Ltd. Rutile titanium oxide CR-63 manufactured by Ishihara Sangyo Kaisha, Ltd. has a band gap of less than 3.1 (eV), and is not suitable for use in the present invention.

The above titanium oxide also functions as a white pigment. Containing the above titanium oxide is preferable in that the polyester film has better color developability and concealability as compared with other white pigments.

It is necessary that the polyester film contains 0.1 to 1.0 mass% of the titanium oxide, and the addition amount is preferably 0.3 to 1.0 mass%, more preferably 0.5 to 0.8 mass%. In a case where the addition amount of the titanium oxide is less than 0.1 mass%, deterioration due to exposure to ultraviolet rays cannot be inhibited, and a film surface exhibiting favorable white color cannot be obtained. On the other hand, in a case where the addition amount is more than 1.0 mass%, the softness and water resistance of the polyester film are deteriorated.

[Polyester Constituting Polyester Film]

In order to improve the water vapour permeability of the fiber laminated structure, it is preferable to use, as a polyester constituting the polyester film, a polyester block copolymer including, as a constituent component, a hard segment including a crystalline polyester unit and a soft segment including an aliphatic polyether unit and/or an aliphatic polyester unit. This copolymer has larger strength deterioration due to ultraviolet irradiation by being copolymerized with the soft segment as compared with the case of using only the hard segment including the crystalline polyester unit. That is, as the breathability is improved, the strength deterioration due to ultraviolet irradiation becomes larger.

The hard segment of the polyester block copolymer used in the present invention is a polyester formed from aromatic dicarboxylic acid or an ester-forming derivative thereof and aliphatic diol, and is preferably a polybutylene terephthalate derived from terephthalic acid and/or dimethyl terephthalate and 1,4-butanediol. In addition, the hard segment may also be a polyester derived from a dicarboxylic acid component such as isophthalic acid, phthalic acid, naphthalene-2,6-dicarboxylic acid, naphthalene-2,7-dicarboxylic acid, diphenyl-4,4-dicarboxylic acid, diphenoxyethanedicarboxylic acid, 5-sulfoisophthalic acid, or ester-forming derivatives thereof, a diol having a molecular weight of 300 or less, for example, fatty acid diol such as ethylene glycol, trimethylene glycol, pentamethylene glycol, hexamethylene glycol, neopentyl glycol, and decamethylene glycol, alicyclic diol such as 1,4-cyclohexanedimethanol and tricyclodecanedimethylol, aromatic diol such as xylylene glycol, bis(p-hydroxy) diphenyl, bis(p-hydroxyphenyl) propane, 2,2-bis[4-(2-hydroxyethoxy) phenyl] propane, bis[4-(2-hydroxy) phenyl] sulfone, 1,1-bis[4-(2-hydroxyethoxy) phenyl] cyclohexane, 4,4'-dihydroxy-p-terphenyl, and 4,4'-dihydroxy-p-quarterphenyl, and the like, or a copolymerized polyester using two or more of these dicarboxylic acid components and diol components in combination. In addition, it is also possible to copolymerize a tri- or higher polyfunctional carboxylic acid component, a polyfunctional oxyacid component, a polyfunctional hydroxy component, and the like in a range of 5 mol% or less.

The soft segment of the polyester block copolymer used in the present invention is an aliphatic polyether and/or an aliphatic polyester. Examples of the aliphatic polyether include poly(ethylene oxide) glycol, poly(propylene oxide) glycol, poly(tetramethylene oxide) glycol, poly(hexamethylene oxide) glycol, a copolymer of ethylene oxide and propylene oxide, an addition polymer of ethylene oxide and poly(propylene oxide) glycol, and a copolymer of ethylene oxide and tetramethylene oxide. In addition, examples of the aliphatic polyester include poly($\varepsilon$-caprolactone), polyenantholactone, polycaprylolactone, polybutylene adipate, and polyethylene adipate. Among these aliphatic polyethers and/or aliphatic polyesters, poly(tetramethylene oxide) glycol, an ethylene oxide adduct of poly(propylene oxide) glycol, poly($\varepsilon$-caprolactone), polybutylene adipate, polyethylene adipate or the like is preferable from the viewpoint of the elastic properties of the polyester block copolymer obtained.

Furthermore, in order to improve the water vapour permeability, the polyester film is preferably a copolymer of polybutylene terephthalate and polyether.

In the present invention, the polyester block copolymer preferably used for the polyester film can be produced by a common method. For example, any method may be used, such as a method in which a lower alcohol diester of dicarboxylic acid, an excess amount of low molecular weight glycol, and a soft segment component are subjected to a transesterification reaction in the presence of a catalyst to polycondense a resulting reaction product, or a method in which dicarboxylic acid, an excess amount of glycol, and a soft segment component are subjected to a transesterification reaction in the presence of a catalyst to polycondense a resulting reaction product, a method in which a hard segment is formed in advance, a soft segment component is added to the hard segment, and the hard segment and the soft segment are randomized by a transesterification reaction, a method in which a hard segment and a soft segment are connected by a chain linking agent, and a method in which an addition reaction of an ε-caprolactone monomer is performed on a hard segment when poly(ε-caprolactone) is used for a soft segment.

As the above preferable polyether ester block copolymer, a commercially available product can also be used, and specifically, "Hytrel (registered trademark)" HTR8206 and "Hytrel (registered trademark)" G3548 from DuPont are preferable.

[Polyester Film]

In addition, in the present invention, the thickness of the polyester film is 10 to 30 μm as described above from the viewpoint of waterproofness (water resistance) and water vapour permeability. If the thickness is less than 10 μm, required waterproofness cannot be obtained. If the thickness is more than 30 μm, the water vapour permeability is lowered. The thickness is preferably 15 to 20 μm.

From the viewpoint of breathability, the polyester film used in the present invention preferably has a D hardness obtained in accordance with JIS K6253-3; 2012 of 55D or less. As the D hardness is lower than 55D, the breathability and softness are enhanced, but if the D hardness is too low, production stability at the time of film formation and swellability to water are increased, and the problem of peeling of the laminated film at the time of wearing is likely to occur. Therefore, the D hardness is particularly preferably 30D or more to 50D or less from the viewpoint of breathability and film peel strength.

The elongation rate of the polyester film used in the present invention is preferably 100% or more to less than 800%, more preferably 200% or more to less than 600% regardless of a stretching process after film formation. By setting the elongation rate of the polyester film to 100% or more, the softness after lamination of the film can be maintained, and the deterioration of the breathability and the water resistance during deformation of the laminate can be inhibited, which are preferable. In addition, by setting the elongation rate of the polyester film to less than 800%, excessive elongation deformation of the film during deformation of the laminate can be inhibited, and the deterioration of the breathability and the water resistance can be inhibited, which are preferable.

It is desirable that as the stretchability of the polyester film in the present invention, an excellent elongation recovery rate is provided in addition to the above-mentioned elongation rate. The elongation recovery rate of the polyester film is preferably 80% or more, more preferably 90% or more. When the elongation recovery rate of the film has the above-mentioned numerical value, the fiber laminated structure follows the movement of a body to achieve excellent fittability when worn as wear, so that an effect of easy movement and less tiredness is obtained.

In addition, the polyester film exhibits stretchability according to the ratio of the soft segment to be copolymerized. It is possible to select a copolymerization ratio according to practicality and application from a balance with the water vapour permeability and a balance with the water swellability, or select a copolymerization ratio from commercially available products.

[Method for Producing Polyester Film]

The polyester film used in the present invention can be produced by a conventionally known film formation method such as a T-die method and an inflation method. For example, in the T-die method, the polyester block copolymer containing the ultraviolet absorber, the light stabilizer, and the specific titanium oxide described above is supplied to an extruder. Next, the polymer in the extruder is heated to its melting point or more, and extruded from a spinneret as a film, which melt-coats a support material, for example, a lightweight polyester or release paper, is wound up and stored for use.

[Method for Producing Fiber Laminated Structure]

As a method for producing the fiber laminated structure of the present invention, the fiber laminated structure is produced by laminating the polyester film as described above on a base fabric including the woven or knitted fabric. For example, the following method can be employed as such a laminating method, but the method is not limited at all.

That is, the method is a laminating method using an adhesive agent. Preferred examples of the adhesive agent include a common hot-melt adhesive agent and a heat-melt adhesive agent such as heat adhesive fiber. In addition, a solvent-based adhesive agent can also be used. In a case where a heat-melt adhesive agent is used, thermocompression bonding can be performed using a heating device. When a common hot-melt adhesive agent is used and its substantial use area is large, the breathability of the fabric may often be deteriorated. Thus, it is preferable to use an adhesive agent made of a breathable resin itself.

In the present invention, it is preferable that an adhesive agent interposed between the woven or knitted fabric and the polyester film is in a dotted form with an area of 0.1 to 100.0 mm$^2$ with respect to the plane direction. The larger the area is, the higher the peel strength is but the rougher or harder the texture is, and therefore, the area is preferably 0.5 to 50.0 mm$^2$, and more preferably the adhesive agent is in a dotted form with an area of 1.0 to 25.0 mm$^2$. In addition, the adhesive agent may be linear form in the plane direction, and is preferably linear or lattice form with a line thickness of 0.1 to 10.0 mm. Similarly to the above, the line thickness is more preferably 1.0 to 10.0 mm, and most preferably in a range of 1.0 to 5.0 mm. The "plane direction" means a plane direction of the fiber laminated structure. Therefore, the area and the thickness of the adhesive agent A referred to herein mean, for example, the area and the thickness of the adhesive agent A on a projection plane on the horizontal plane when the fiber laminated structure is arranged in the horizontal direction.

In addition, in order to increase the accuracy of control of the peel strength and to stabilize the water vapour permeability or the air permeability and the water resistance of the fiber laminated structure at a high level, the adhesive agent is preferably provided at an area ratio of 70% or less with respect to the woven fabric in the plane direction. The area ratio is more preferably 10 to 70%, and still more preferably 30 to 70%.

It is preferable to reduce the area of the dots or lines of the adhesive agent and reduce the area ratio of the adhesive agent. However, if doing so, the peel strength or the water resistance is reduced. On the other hand, in order to enhance the peel strength and the water resistance, it is preferable to increase the area of the dots or lines of the adhesive agent and increase the area ratio, and it is most preferable to form an adhesive layer on the entire area, but if doing so, the water vapour permeability decreases. In order to properly maintain the opposite functionalities, it is preferable to apply the adhesive agent in a dotted form with an area of 0.1 to 100.0 mm$^2$ or a linear or lattice form with a line thickness of 0.1 to 10.0 mm, at an area ratio of 10 to 70%.

The dotted form may be any form such as a circle, a quadrangle, a rhombus, an ellipse, or a triangle, and may be arranged with a combination to these forms to form a pattern or a character, or may be arranged in a logo mark of a trademark, or the like. In addition, the dots may be arranged to form a continuous pattern or may be arranged randomly. The linear shape may be either a straight line or a curved line. The area ratio is the coverage by the adhesive agent.

In the case of applying in a dotted form, when the application area of each dot of the adhesive agent A is less than 0.1 mm$^2$, the adhesiveness is low, and when the application area is more than 100.0 mm$^2$, the size of the binding point of the woven or knitted fabric is increased, so that the texture tends to be rough and hard, and the water vapour permeability tends to be low. When the line thickness of the linear form and the lattice form is less than 0.1 mm, the adhesiveness is low, and when the line thickness is more than 10.0 mm, the size of the binding point of the woven or knitted fabric is increased, so that the texture may be rough and hard. Furthermore, when the coverage area ratio by the adhesive agent is less than 10%, the adhesiveness is low, and when the coverage area ratio is more than 70%, the number of binding points of the woven or knitted fabric increases, and the texture may be rough and hard.

In the present invention, the adhesive agent is preferably a hot-melt adhesive agent containing no organic solvent. Examples of a resin having hot-melt adhesiveness include polyurethane-based resins, polyester-based resins, polyether-based resins, and polyamide-based resins, and polyurethane-based resins are preferable in consideration of adhesiveness, flexibility, texture, elasticity, and the like. In addition, a solvent-based adhesive agent can also be suitably used.

In a method for applying the adhesive agent, a knife coater, a bar coater, a gravure coater, or the like can be used, and in particular, a gravure coater can relatively easily apply the adhesive agent in a dotted, linear, or lattice form and is preferable from the viewpoint of breathability, but the application method is not limited thereto.

In addition, the bonding method may be employed with choice depending on desired properties, such as a wet lamination method or a dry lamination method, and from the viewpoint of texture and adhesiveness, it is preferable to employ a dry lamination method involving application of the adhesive agent to the woven fabric.

[Fiber Laminated Structure]

The fiber laminated structure of the present invention is a fiber laminated structure (hereinafter, also referred to as a two-layer fiber laminated structure for convenience) in which the non-porous film is laminated on one surface of the woven or knitted fabric including the polyester fibers as described above, but the fiber laminated structure can further include a knitted fabric (hereinafter, also referred to as a third-layer knitted fabric) including polyester filaments on the non-porous film.

In a case where the fiber laminated structure having the above third-layer knitted fabric is used for clothing or the like, it is preferable to use the third-layer knitted fabric side as a backing (side close to the skin) and the woven or knitted fabric side as an outer fabric.

The fiber laminated structure of the present invention can be used as a two-layer product of the woven or knitted fabric and the non-porous film without attaching the third-layer knitted fabric, but it is desirable to attach the third-layer knitted fabric to function as the backing also in terms of preventing damage due to friction of the non-porous film or the like and imparting a luxurious feel.

For the third-layer knitted fabric, a knitted fabric including 100 mass% of polyester multifilaments is suitable.

As such a polyester multifilament, a multifilament including polyethylene terephthalate, polytrimethylene terephthalate, or polybutylene terephthalate is preferable. As the filament form, there is no problem even if the multifilament is a single-material yarn or a side-by-side or core-sheath composite multifilament.

Stretchability can be obtained by using a false-twisted yarn or a side-by-side yarn of different polymers as the polyester multifilament. A covered yarn using an elastic yarn of a spandex yarn diameter may also be used. However, it should be noted that as the blend ratio of the spandex yarn increases, the rate of contamination by another material increases and the recycling efficiency decreases.

In the present invention, in order to increase the recycling efficiency, the amount of polyester fiber including the polyester multifilament as a fiber component in the knitted fabric is preferably 100 mass%. For example, in a case where a non-polyester elastic yarn is used as described above, it is desirable that the content of the polyester fiber in a fiber constituting the knitted fabric is high, and the ratio of the polyester fiber is preferably at least 80 mass% or more, more preferably 85 mass% or more, and still more preferably 90 mass% or more.

Use of the polyester multifilament in the knitted fabric similarly to the woven fabric enhances recyclability such as material recycling and chemical recycling. In the fiber constituting the fiber laminated structure, the smaller the number of types of polyesters to be used, the more excellent the material recyclability, and the smaller the number of types of monomer components, the more excellent the chemical recyclability. Materials to be used may be appropriately selected in view of functions and recyclability required in practical use.

The knitted fabric may also be subjected to processing as necessary, such as water repellent finishing, antistatic processing, antibacterial processing, ultraviolet absorption processing, and near infrared absorption processing.

When a sealing tape is used to maintain the waterproofness of a seam, the sealing tape is bonded to the backing with a molten resin. It is preferable to use a knitted fabric having a low density for the backing so that the molten resin easily penetrates through the backing and reaches the waterproof breathable film. A tricot or circular knitting fabric is preferable from the viewpoint of being thin and rough.

The above third-layer knitted fabric is preferably laminated on the non-porous film of the two-layer fiber laminated structure with an adhesive agent.

As the adhesive agent for laminating the third-layer knitted fabric, similarly to the adhesive agent for the woven fabric described above, a hot-melt adhesive agent containing no organic solvent is preferable. Examples of a resin having hot-melt adhesiveness include polyurethane-based resins, polyester-based resins, polyether-based resins, and polyamide-based resins, and polyurethane-based resins are preferable in consideration of adhesiveness, flexibility, texture, elasticity, and the like. In addition, a solvent-based adhesive agent can also be suitably used. In addition, it is possible to employ an adhesive agent application method and lamination conditions similar to the above-mentioned bonding conditions of the woven fabric.

The fiber laminated structure of the present invention preferably has excellent water vapour permeability. It is preferable that a water vapour permeability in accordance with JIS L-1099A-1 is 4000 $g/m^2 \cdot 24h$ or more, and a water vapour permeability in accordance with JIS L-1099B-1 is 10000 $g/m^2 \cdot 24h$ or more.

Since the fiber laminated structure of the present invention has high waterproofness, it is preferable that the fiber laminated structure has a property of preventing rainwater infiltration, that is, excellent performance such as a water resistance of at least 150 kPa or more. The water resistance is more preferably 200 kPa or more. Within the above range, rainwater infiltration into clothes at the time of wearing can also be inhibited.

In addition, from the viewpoint of securing durability of actual wearing, a water resistance after ultraviolet fade meter grade 4 irradiation is preferably 150 kPa or more. The water resistance is more preferably 200 kPa or more. Within the above range, durability to exposure to sunlight is excellent, and rainwater infiltration into clothes at the time of wearing can also be inhibited.

The term "after ultraviolet fade meter grade 4 irradiation" means after irradiation with a bluescale grade 4 by a fade meter in accordance with JIS L0842-2004 color fastness to light test. In general, in clothing applications, when color fastness to light after grade 4 irradiation is grade 4 or higher discoloration in grayscale determination, it is determined as an acceptable value without any problem. That is, it is desired that the water resistance does not significantly change after ultraviolet grade 4 irradiation by a fade meter.

On the other hand, in durability of water resistance, which is one of the most important functionalities in waterproof breathable functional products, washing durability is often checked as a representative property for determining durability. However, it has been confirmed that a decrease in water resistance by ultraviolet irradiation under sunlight exposure is also an important requirement particularly in outdoor applications. It is preferable that the water resistance after grade 4 irradiation in accordance with the color fastness to light test described above is 150 kPa or more from the viewpoint of obtaining general practical durability. In addition, in the case of more severe conditions, for example, a high mountain, a snowy mountain, or the sea with high ultraviolet irradiation energy, the water resistance after grade 4 irradiation is desirably 200 kPa or more.

Improvement of the water resistance after ultraviolet fade meter grade 4 irradiation can be achieved by using the ultraviolet absorber, the light stabilizer, and the titanium oxide in combination in a preferred aspect in the polyester film as described above.

It is also preferable that the fiber laminated structure of the present invention is subjected to water repellent finishing. By performing the water repellent finishing, the fiber laminated structure becomes a more practical product as a waterproof breathable material, and water repellent finishing having high washing durability and friction durability is desirable. As the water repellent, known water repellents such as fluorine-based, silicone-based, and paraffin-based water repellents can be used. As the processing method, a common processing method such as pad-dry-cure can be used. In the processing, any processing method can be applied at any timing such as before and after lamination of the polyester film.

Furthermore, processing as necessary such as antistatic processing, antibacterial processing, ultraviolet absorption processing, or near infrared absorption processing may be performed.

Waterproof breathable clothing obtained by using the fiber laminated structure of the present invention has a high effect of preventing stuffiness because of such high waterproofness and breathability, is excellent in wearing comfort, and also has high durability to ultraviolet irradiation by exposure to sunlight. Thus, the waterproof breathable clothing can be suitably employed for outdoor wear or windbreakers for mountain climbing or skiing, which is vigorous exercise, rainwear for strenuous work, and the like.

EXAMPLES

Next, the present invention will be described specifically with reference to examples, but the present invention is not limited to these examples. Various measurement methods in the present invention are as follows.

(1) Thickness of film

A film in a free state with no load applied was cut with a single-edged razor at 10 random locations, the cross section was observed with an electron microscope, the thickness was measured, and the average value was taken as the thickness.

(2) Ultraviolet fade meter irradiation

A woven fabric surface of a 15 cm × 15 cm fiber laminated structure sample was irradiated with ultraviolet rays in accordance with JIS L0842-2021 color fastness test, fifth light exposure method, grade 4 (20 hours) to ultraviolet carbon arc lamp light.

(3) Water resistance

Measurement was performed in accordance with JIS L1092-2009 water resistance B method (high water pressure method).

In the case of measuring a film alone or in the case of measuring a stretchable sample, taffeta with no stretchability was overlaid on the back side (side not exposed to water) so as not to stretch the sample. The number of samples at one level was 5, and the average value was taken as the water resistance.

In addition, measurement was performed using the sample after ultraviolet fade meter irradiation grade 4 irradiation described above, and the water resistance was obtained in the same manner.

(4) Ultraviolet shielding rate

Measurement was performed in accordance with JIS L1925-2019 ultraviolet shielding rate.
That is, a random portion (randomly selected portion) of the woven fabric was cut and sampled. A transmittance to ultraviolet rays in a wavelength range of 290 to 400 nm was measured, and the ultraviolet shielding rate was calculated by the following formula.

```
ultraviolet shielding rate (%) = 100 - average

transmittance to ultraviolet ray (%)
```

The number of samples at one level was 4 (2 in the warp direction, 2 in the weft direction), and the average value was taken as the average transmittance.

In a case where the measurement is performed using the fiber laminated structure, layers other than the woven fabric are removed as much as possible to perform the measurement.

(5) Water vapour permeability

Measurement was performed in accordance with JIS L1099-2021 calcium chloride method (A-1 method) and JIS L1099-2021 potassium acetate method (B-1 method).
Specifically, the measurement was performed by setting the fiber laminated structure so as to apply water vapor to a surface opposite to the woven fabric surface.
However, in both the test methods, the measurements were each converted into an amount of moisture permeated per 24 hours. The measurement was performed by setting the number of samples at one level to 3, and the average value was taken as the water vapour permeability.

(6) Elongation rate

Measurement was performed in accordance with JIS L1096-2010 elongation rate A method (constant speed elongation method).
The stretch rate of a woven fabric sample in the weft direction was measured by adopting, as the stretch rate, an elongation rate at 14.7 N stress by a strip method with a grip interval of 200 mm and a width of 50 mm. The elongation rate was measured by setting the number of samples at one level to 3, and the average value was taken as the elongation rate.

(7) Lightness

The lightness (L* value) of the woven fabric was measured using CM-3700A manufactured by KONICA MINOLTA, Inc. with a surface opposite to a surface on which the non-porous film was laminated as a measurement object.
The measurement was performed by setting the number of samples at one level to 3, and the average value was taken as the L* value.

(8) Confirmation of non-porous film

(8-1) Confirmation of film cross section

In a case where the cross section of the film was observed with an electron microscope (SU3800 manufactured by Hitachi High-Tech Corporation, magnification: 2000 times), the presence or absence of communication holes was measured on the front surface and the back surface.

(8-2) Air permeability

The single film to which no woven or knitted fabric was bonded was measured at 5 locations in accordance with JIS L1096-2010 air permeability A method (Frazier method), and the average value was measured.
In a case where the air permeability is measured using the fiber laminated structure, gas leaks from between layers of the fiber laminated structure sample during the measurement, so that the air permeability is likely to be measured with a high level. Therefore, the air permeability may be measured after taking a measure to prevent gas leakage from between layers.

(9) Band gap of titanium oxide

Using titanium oxide powder as a measurement sample, a relationship between the absorption wavelength and the band gap was measured using integrating sphere spectrophotometer UV-2600 manufactured by Shimadzu Corporation. Using an integrating sphere, the diffuse reflection spectrum of the titanium oxide powder was measured using a standard white plate of barium sulfate as a standard sample, and the absorption spectrum of the titanium oxide was obtained by Kubelka-Munk display. The absorption wavelength and the band gap are converted by the following calculation formula with the band gap as E (eV) and the absorption wavelength as $\lambda$ (nm).

$$E \ [eV] = 1240/\lambda \ [nm]$$

The excitation wavelength $\lambda$ used here is an absorption wavelength between bands in indirect transition, and is calculated using a spectrum obtained from the indirect transition when obtaining the band gap from the absorption spectrum. When the band gap was obtained from the absorption spectrum of the titanium oxide obtained as a result of the measurement by the device described above, the following formula was used.

$$(h\nu\alpha)^{1/n} = A(h\nu - E_g)$$

hv: energy of photon, $\alpha$: absorption coefficient, Eg: band gap, A: constant

In the case of direct transition, n=1/2, and in the case of indirect transition, n=2. In the present invention, n=2 is used as the indirect transition. The unit of energy was expressed in eV, and a value obtained by plotting $(h\nu\alpha)^{1/2}$ for hv was used for calculating the band gap. A value of Kubelka-Munk was used as a value approximately proportional to the absorption coefficient $\alpha$. In order to determine the band gap, a tangent line was drawn at an inflection point of a curve corresponding to a rise of absorption considered to be derived from inter-band transition, and a value of an intersection point between the above tangent line and an approximate straight line around 1.5 to 2.3 eV was taken as the band gap. In a case where there is no absorption derived from another additive in the titanium oxide, the approximate straight line around 1.5 to 2.3 eV is usually an x-intercept (intersection point with vertical axis = 0).

(10) Hardness of non-porous film

An injection-molded plate having the same composition as that of the non-porous film and a thickness of 6 mm was prepared, the hardness was measured at 5 locations in accordance with JIS K6253-3: 2012 durometer hardness (type D), and the average value was measured.

[Example 1]

Polyethylene terephthalate semi-dull round cross-section multifilaments of 56 dtex-42 filaments as a warp yarn and 94 dtex-48 filaments as a weft yarn were subjected to false twisting so as to be provided with stretchability. Subsequently, the false-twisted yarns were used as a warp yarn and a weft yarn, and were woven with a water jet loom such that the density was 111 × 77 yarns/2.54 cm as warp × weft. Then, the resulting woven fabric was scoured and relaxed, and then dyed white with a jet dyeing machine by a conventional method by presetting. After that, the woven fabric surface was applied with a 5% aqueous solution of "AsahiGuard (registered trademark)" AG710 (fluorinated water repellent, manufactured by AGC Inc.) by a pad-drycure method so as to have an attachment rate of 60%, dried at 120°C for 1 minute, then heat-treated at 170°C for 40 seconds, and finally set to obtain a white woven fabric finished with a finish density of 154 × 122 yarns/2.54 cm as warp × weft.

On the other hand, as a method for preparing a polyester block copolymer composition for forming the polyester film in Examples and Comparative Examples, a polyester block copolymer ("Hytrel (registered trademark)" HTR8206 manufactured by DuPont), an ultraviolet absorber (benzotriazole-based ultraviolet absorber "TinuVin (registered trademark)" 326 manufactured by BASF Corporation), a light stabilizer (hindered amine-based light stabilizer "Tinuvin (registered trademark)" 144 manufactured by BASF Corporation), and a titanium oxide (anatase titanium oxide SA-1L manufactured by Sakai Chemical Industry Co., Ltd., average particle size: 0.18 $\mu$m) were dry-blended at a ratio shown in Table 1, meltkneaded with a cylinder temperature set to 210°C using a twin screw extruder having a triple-start screw type screw at 45 mm$\varphi$, then discharged in a strand shape, cooled in a water bath, and subsequently pelletized into a size of $\varphi$3 mm and 3-mm length by a pelletizer.

The resulting pellet of the polyester block copolymer composition was dried at 80°C for 4 hours, and then meltextruded from a T-slit die at a resin temperature of 230°C with an extruder to prepare a non-stretched polyester film (white) having a thickness of 20 $\mu$m (basis weight: 19 g/m$^2$).

A moisture-curable polyurethane hot-melt adhesive agent was heated to and dissolved at 110°C, then applied to the above woven fabric finished in white with a gravure coater equipped with a gravure roll on which 0.40 mm × 0.40 mm squares (depth: 20 $\mu$m) were engraved at an angle of 45° with respect to the traveling direction of the woven fabric and at 40 meshes, and then dried at 120°C for 1 minute. As a result, the adhesive agent was applied in a dotted form to the fabric. Each of the dots was a square 0.40 mm on each side and the dots were arranged at an angle of 45° with respect to the length direction. The area ratio (coverage) of the adhesive agent to the fabric was 40%, and the adhesive agent application amount was 15 g/m$^2$.

Then, the non-stretched polyester film obtained above was overlaid on the adhesive agent side of the woven fabric coated with the above adhesive agent, and a linear pressure of 49 N/cm was applied between a metal roll and a rubber roll at a temperature of 110°C. After that, aging was performed at room temperature for 48 hours to obtain a two-layer fiber laminated structure in which the woven fabric and the polyester film were laminated.

Next, a moisture-curable polyurethane hot-melt adhesive agent was applied to a sinker surface of a half tricot dyed gray using a polyethylene terephthalate semidull round cross-section multifilament of 22 dtex-20 filaments in the same manner as the application of the adhesive agent to the woven fabric, and a knitted fabric was laminated thereon (area ratio: 40%, amount of attached resin: 10 g/m$^2$) so as to be bonded to the surface on the polyester film side of the above two-layer fiber laminated structure to prepare a three-layer fiber laminated structure.

The resulting fiber laminated structure had excellent breathable waterproof performance with an A-1 method water vapour permeability of 4500 g/m$^2$·24 hours, a B-1 method water vapour permeability of 25000 g/m$^2$·24 hours, a water resistance of 250 kPa, and an elongation rate of 15% in the weft direction. The fiber laminated structure also had excellent light fastness with a water resistance of 230 kPa after ultraviolet fade meter grade 4 irradiation.

In addition, the ultraviolet shielding rate of the woven fabric finished in white before lamination was 83%. The measured values obtained are shown in Table 1.

[Example 2]

A woven fabric produced by the same method as in Example 1 except that the woven fabric of Example 1 was dyed black so as to have the L* value in Table 1 was used, a polyester film was produced by changing the addition amounts of the ultraviolet absorber and the light stabilizer during formation of the polyester film to 0.2 mass% each as the content in the polyester film, and a fiber laminated structure laminated in three layers was obtained by the same method as in Example 1.

The obtained fiber laminated structure maintained favorable water resistance after ultraviolet fade meter irradiation. In addition, the ultraviolet shielding rate of the woven fabric finished in black before lamination was 93%.

The measured values obtained are shown in Table 1.

[Example 3]

A woven fabric produced by the same method as in Example 1 except that the woven fabric of Example 1 was dyed yellow so as to have the L* value in Table 1 was used, a polyester film was produced by the same method as in Example 1 except that the addition amounts of the ultraviolet absorber and the light stabilizer during formation of the polyester film were changed to 0.4 mass% each in the polyester film, and a fiber laminated structure laminated in three layers was obtained by the same method as in Example 1.

The obtained fiber laminated structure maintained favorable water resistance after ultraviolet fade meter irradiation. In addition, the ultraviolet shielding rate of the woven fabric finished in yellow before lamination was 85%. The measured values obtained are shown in Table 1.

[Example 4]

A woven fabric produced by the same method as in Example 1 except that the woven fabric of Example 1 was dyed blue so as to have the L* value in Table 1 was used, a polyester film was produced by changing the addition amounts of the ultraviolet absorber and the light stabilizer during formation of the polyester film to 0.3 mass% each in the polyester film, and a fiber laminated structure laminated in three layers was obtained by the same method as in Example 1.

The obtained fiber laminated structure maintained favorable water resistance after ultraviolet fade meter irradiation. In addition, the ultraviolet shielding rate of the woven fabric finished in blue before lamination was 89%. The measured values obtained are shown in Table 1.

[Comparative Example 1]

A fiber laminated structure was obtained and evaluated in the same manner as in Example 1 except that the following points were changed. That is, in a case where the ultraviolet absorber was not added to the polyester film, the water resistance was deteriorated by ultraviolet rays to 120 kPa after ultraviolet fade meter grade 4 irradiation. The measured values are shown in Table 1.

[Comparative Example 2]

A fiber laminated structure was obtained and evaluated in the same manner as in Example 1 except that the following points were changed. That is, in a case where the light stabilizer was not added to the polyester film, the water resistance was deteriorated by ultraviolet rays to 105 kPa after ultraviolet fade meter grade 4 irradiation. The measured values are shown in Table 1.

[Comparative Example 3]

A fiber laminated structure was obtained and evaluated in the same manner as in Example 1 except that the following points were changed. That is, in a case where the ultraviolet absorber and the light stabilizer were not added to the polyester film, the water resistance was deteriorated by ultraviolet rays to a water resistance of 60 kPa after ultraviolet fade meter grade 4 irradiation. The measured values are shown in Table 1.

[Comparative Example 4]

A fiber laminated structure was obtained and evaluated in the same manner as in Example 1 except that the following points were changed. That is, in a case where the ultraviolet absorber, the light stabilizer, and the white pigment were not added to the polyester film, the water resistance was deteriorated by ultraviolet rays to 20 kPa after ultraviolet fade meter grade 4 irradiation. The measured values are shown in Table 1.

[Comparative Example 5]

A fiber laminated structure was obtained and evaluated in the same manner as in Example 1 except that the following points were changed. That is, the ultraviolet absorber and the light stabilizer were not added to the polyester film, and rutile titanium oxide CR-63 (average particle size: 0.21 $\mu$m) manufactured by Ishihara Sangyo Kaisha, Ltd. was added as the titanium oxide.
The water resistance was deteriorated by ultraviolet rays to 40 kPa after ultraviolet fade meter grade 4 irradiation. The measured values are shown in Table 1.

[Comparative Example 6]

A fiber laminated structure was obtained and evaluated in the same manner as in Example 1 except that the following points were changed. That is, rutile titanium oxide CR-63 (average particle size: 0.21 $\mu$m) manufactured by Ishihara Sangyo Kaisha, Ltd. was added to the polyester film as the titanium oxide.
The water resistance was deteriorated by ultraviolet rays to 50 kPa after ultraviolet fade meter grade 4 irradiation. The measured values are shown in Table 1.

[Table 1-1]

| | Woven fabric physical properties | | Film | | | | | Fiber laminated structure physical properties |
| | Woven fabric L* value | Woven fabric Ultraviolet shielding rate | Ultraviolet absorber | Light stabilizer | Titanium oxide | | | Water resistance before ultraviolet fade meter grade 4 irradiation (kPa) |
| | | JIS L1925-2019 | Addition amount (mass%) | Addition amount (mass%) | Addition amount (mass%) | Band gap (eV) | Type | JIS L1092-2009 Water resistance B method |
|---|---|---|---|---|---|---|---|---|
| Example 1 | 91 | 83 | 0.5 | 0.5 | 0.8 | 3.28 | Anatase | 235 |
| Example 2 | 21 | 93 | 0.2 | 0.2 | 0.8 | 3.28 | Anatase | 235 |
| Example 3 | 47 | 85 | 0.4 | 0.4 | 0.8 | 3.28 | Anatase | 235 |
| Example 4 | 76 | 89 | 0.3 | 0.3 | 0.5 | 3.28 | Anatase | 235 |

(continued)

| | Woven fabric physical properties | | Film | | | | | Fiber laminated structure physical properties |
|---|---|---|---|---|---|---|---|---|
| | Woven fabric L* value | Woven fabric Ultraviolet shielding rate | Ultraviolet absorber | Light stabilizer | Titanium oxide | | | Water resistance before ultraviolet fade meter grade 4 irradiation (kPa) |
| | | JIS L1925-2019 | Addition amount (mass%) | Addition amount (mass%) | Addition amount (mass%) | Band gap (eV) | Type | JIS L1092-2009 Water resistance B method |
| Comparative Example 1 | 91 | 83 | 0.0 | 0.5 | 0.1 | 3.28 | Anatase | 235 |
| Comparative Example 2 | 91 | 83 | 0.5 | 0.0 | 0.2 | 3.28 | Anatase | 235 |
| Comparative Example 3 | 91 | 83 | 0.0 | 0.0 | 0.2 | 3.28 | Anatase | 235 |
| Comparative Example 4 | 91 | 83 | 0.0 | 0.0 | 0.0 | - | - | 235 |
| Comparative Example 5 | 91 | 83 | 0.0 | 0.0 | 0.5 | 3.03 | Rutile | 235 |
| Comparative Example 6 | 91 | 83 | 0.4 | 0.9 | 0.5 | 3.03 | Rutile | 235 |

[Table 1-2]

| | Fiber laminated structure physical properties | | | | | Film physical properties | |
| --- | --- | --- | --- | --- | --- | --- | --- |
| | Water resistance after ultraviolet fade meter grade 4 irradiation (kPa) | Water vapour permeability (g/m²·24 hours) | Water vapour permeability (g/m²·24 hours) | Weft direction elongation rate (%) | Communication hole | Hardness (D) | Air permeability (Cc) |
| | JIS L1092-2009 Water resistance B method | JIS L1099-2021 Calcium chloride (A-1 method) | JIS L1099-2021 Calcium chloride (B-1 method) | JIS L1096-2010 Elongation rate (A method) | | JIS K6253-3-2012 Durometer hardness (type D) | JIS L1096-2010 Air permeability A method (Frazier form method) |
| Example 1 | 230 | 4500 | 25000 | 15 | Absent | 38 | 0 |
| Example 2 | 220 | 4400 | 24500 | 15 | Absent | 38 | 0 |
| Example 3 | 205 | 4500 | 25000 | 15 | Absent | 38 | 0 |
| Example 4 | 235 | 4500 | 24800 | 15 | Absent | 38 | 0 |
| Comparative Example 1 | 120 | 4500 | 24600 | 15 | Absent | 38 | 0 |
| Comparative Example 2 | 105 | 4550 | 25100 | 15 | Absent | 38 | 0 |
| Comparative Example 3 | 60 | 5500 | 28000 | 15 | Absent | 38 | 0 |
| Comparative Example 4 | 20 | 4400 | 24500 | 17 | Absent | 38 | 0 |
| Comparative Example 5 | 40 | 4500 | 25000 | 15 | Absent | 38 | 0 |
| Comparative Example 6 | 50 | 4500 | 25000 | 15 | Absent | 38 | 0 |

As described above, the fiber laminated structures produced in Examples 1 to 4 had excellent light fastness and a highly-practical high waterproof breathable function. In addition, these fiber laminated structures were substantially composed of polyester, had many common constituent monomers as monomers of the dicarboxylic acid component and the diol component, and had high recycling efficiency in both material recycling and chemical recycling.

INDUSTRIAL APPLICABILITY

Since the fiber laminated structure of the present invention has high breathability and waterproofness and is superior in durability, the fiber laminated structure of the present invention can be suitably used in the clothing field including outdoor wear such as fishing and mountain climbing wear, ski/snowboard wear, window breaker, athletic wear, golf wear, tennis wear, rainwear, casual wear, work wear, gloves and shoes, and the clothing material field including globe inserts and boot inserts. In addition, the fiber laminated structure of the present invention can be suitably recycled after functioning as the above applications, and is also superior in recycling efficiency.

**Claims**

1. A fiber laminated structure comprising a 10 to 30 μm-thick non-porous film including a polyester film laminated on one surface of a woven or knitted fabric including a polyester fiber, wherein the polyester film contains 0.05 to 1.0 mass% of an ultraviolet absorber and a light stabilizer each, and 0.1 to 1.0 mass% of a titanium oxide having a band gap of 3.1 (eV) or more.

2. A fiber laminated structure comprising a 10 to 30 μm-thick non-porous film including a polyester film laminated on one surface of a woven or knitted fabric including a polyester fiber, wherein the polyester film contains 0.05 to 1.0 mass% of an ultraviolet absorber and a light stabilizer each, and 0.1 to 1.0 mass% of an anatase titanium oxide.

3. The fiber laminated structure according to claim 1 or 2, wherein the polyester film contains a polyester block copolymer including, as a constituent component, a hard segment including a crystalline polyester unit and a soft segment including an aliphatic polyether unit and/or an aliphatic polyester unit.

4. The fiber laminated structure according to claim 1 or 2, wherein the woven or knitted fabric is a woven fabric.

5. The fiber laminated structure according to claim 1 or 2, further comprising a knitted fabric including a polyester filament on the non-porous film including the polyester film.

6. The fiber laminated structure according to claim 1 or 2, wherein the woven or knitted fabric including the polyester fiber has an ultraviolet shielding rate of 80% or more.

7. The fiber laminated structure according to claim 1 or 2, wherein a water vapour permeability in accordance with JIS L-1099A-1 is 4000 g/m$^2$·24h or more, and a water vapour permeability in accordance with JIS L-1099B-1 is 10000 g/m$^2$·24h or more.

8. The fiber laminated structure according to claim 1 or 2, wherein the woven or knitted fabric has stretchability in at least one of a warp direction and a weft direction, and an elongation rate in accordance with JIS L1096-2010 elongation rate A method (constant speed elongation method) is 10% or more.

9. Waterproof breathable clothing comprising the fiber laminated structure according to claim 1 or 2.

## INTERNATIONAL SEARCH REPORT

| International application No. |
|---|
| **PCT/JP2023/040714** |

**A. CLASSIFICATION OF SUBJECT MATTER**

*B32B 27/36*(2006.01)i; *A41D 31/00*(2019.01)i; *A41D 31/02*(2019.01)i; *A41D 31/102*(2019.01)i; *B32B 5/02*(2006.01)i; *B32B 27/18*(2006.01)i; *B32B 27/20*(2006.01)i; *D06M 17/00*(2006.01)i

FI: B32B27/36; A41D31/00 502B; A41D31/00 503G; A41D31/02 A; A41D31/102; B32B5/02 A; B32B27/18 A; B32B27/20 A; D06M17/00 K; D06M17/00 L

According to International Patent Classification (IPC) or to both national classification and IPC

**B. FIELDS SEARCHED**

Minimum documentation searched (classification system followed by classification symbols)

B32B27/36; A41D31/00; A41D31/02; A41D31/102; B32B5/02; B32B27/18; B32B27/20; D06M17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-201014 A (TEIJIN FIBERS LTD.) 04 September 2008 (2008-09-04) entire text | 1-9 |
| A | JP 11-170461 A (TORAY INDUSTRIES, INC.) 29 June 1999 (1999-06-29) entire text | 1-9 |
| A | JP 7-189018 A (TOYO BOSEKI K.K.) 25 July 1995 (1995-07-25) entire text | 1-9 |
| A | JP 2008-528790 A (E.I. DU PONT DE NEMOURS AND CO.) 31 July 2008 (2008-07-31) entire text | 1-9 |
| A | JP 8-226014 A (CIBA GEIGY AG) 03 September 1996 (1996-09-03) entire text | 1-9 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 December 2023** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/040714**

| Patent document cited in search report | | | Publication date (day/month/year) | Patent family member(s) | | | Publication date (day/month/year) |
|---|---|---|---|---|---|---|---|
| JP | 2008-201014 | A | 04 September 2008 | US | 2010/0071112 | A1 | |
| | | | | entire text | | | |
| | | | | WO | 2008/102483 | A1 | |
| | | | | EP | 2116373 | A1 | |
| | | | | CN | 101610905 | A | |
| | | | | KR | 10-2009-0116798 | A | |
| | | | | TW | 200911530 | A | |
| JP | 11-170461 | A | 29 June 1999 | (Family: none) | | | |
| JP | 7-189018 | A | 25 July 1995 | (Family: none) | | | |
| JP | 2008-528790 | A | 31 July 2008 | US | 2006/0173106 | A1 | |
| | | | | entire text | | | |
| | | | | WO | 2006/083817 | A1 | |
| | | | | EP | 1844095 | A1 | |
| | | | | CN | 101155865 | A | |
| JP | 8-226014 | A | 03 September 1996 | EP | 704560 | A1 | |
| | | | | entire text | | | |
| | | | | NO | 308709 | B | |
| | | | | ES | 2128024 | T | |
| | | | | BR | 9504234 | A | |
| | | | | ZA | 9508217 | A | |
| | | | | AT | 175731 | T | |
| | | | | CA | 2159418 | A | |
| | | | | SK | 120995 | A | |
| | | | | DK | 704560 | T | |
| | | | | RU | 2150535 | C | |
| | | | | CN | 1130217 | A | |
| | | | | KR | 10-0387906 | B | |
| | | | | TW | 304993 | B | |
| | | | | ZA | 958217 | B | |

Form PCT/ISA/210 (patent family annex) (January 2015)

# EP 4 620 671 A1

**Patent documents cited in the description**

- JP 11170461 A

- JP 2007296797 A